# EUROPEAN PATENT APPLICATION

(11) **EP 4 617 325 A1**
(43) Date of publication of application: **17.09.2025**
(21) Application number: 23888531.3
(22) Date of filing: 27.10.2023
(51) Int. Cl.: C09B 48/00, C09B 67/20

(54) **QUINACRIDONE COMPOUND**

(30) Priority: 10.11.2022 JP 2022180003
(71) Applicant: DIC Corporation, Tokyo 174-8520 (JP)
(72) Inventor: FOO, Siongwan, Kamisu-shi, Ibaraki 314-0193 (JP); EBATO, Hiroshi, Tokyo 174-8520 (JP)
(74) Representative: TBK
(86) International application number: PCT/JP2023/038864
(87) International publication number: WO 2024/101183

(57) **Abstract**

Provided are a quinacridone compound derived from biomass, which is obtainable safely and through a clean, green, and carbon neutral approach. and a composition containing the compound. A quinacridone compound including a radioactive carbon atom ¹⁴C and having the structure represented by the following formula (B). 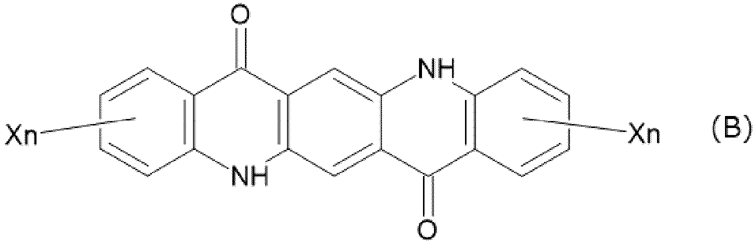 (In the formula (B), X each independently represents -Cl, -F, -Br, -I, -OH, -NO₂, a C1 to C12 alkyl group, a C1 to C12 alkoxy group, a phenyl group, -COOH, -COO- C1 to C12 alkyl, or - CO-NR, R each independently represents a hydrogen atom, an alkyl group, an alkenyl group, or a phenyl group, and n each independently represents 1 or 2.)

## Description

### TECHNICAL FIELD

The present invention relates to a quinacridone compound, a composition containing the compound, and a method for producing the compound.

### BACKGROUND ART

Quinacridone is an important red pigment in our daily life since it has the firm structure and is excellent in light resistance and weather resistance. Therefore, it is used widely, for examples, for coating materials for automobiles, coating materials for decoration, GI coating, plastics, or inks.

With respect to a dichloroquinacridone pigment having a structure of quinacridone, the method for producing the same is disclosed (refer to PTL 1).

In the conventional method for synthesizing a quinacridone, benzene and butane derived from fossil resources are used as the main raw materials.

By the way, in recent years, the global trend has been shifting towards placing emphasis on sustainable development. The reduction of CO₂ emissions is an important issue, and the conversion of a raw material derived from petroleum to a biomass raw material is also an important issue. Furthermore, a replacement of a toxic chemical substance by a less toxic replacement is emphasized.

Considering future demands for environmental issues, quinacridone red pigments being currently manufactured are not satisfactory, and it is so desired to provide a quinacridone red pigment derived from biomass from the viewpoints of clean, green, and carbon neutral.

### CITATION LIST

### PATENT LITERATURE

PTL 1: JP2007-197630A

### SUMMARY OF INVENTION

### TECHNICAL PROBLEM

An object of the invention is to provide a quinacridone compound derived from biomass, which can be used as a biomass red pigment, and is obtainable safely and through a clean, green, and carbon neutral approach. and a composition containing the compound.

### SOLUTION TO PROBLEM

As a result of studying to solve the above object, the present inventor has found that a quinacridone compound derived from biomass which can be used as a red pigment can be obtained by using bio-4-aminobenzoic acid (in the present description, 4-aminobenzoic acid is sometimes abbreviated as "PABA") and bio-succinic acid to thereby derive a secondary bio raw material or a bio intermediate, and subsequently, subjecting the secondary bio raw material or the bio intermediate to a coupling reaction or a dehydration or cyclization reaction, thereby completing the invention.

Namely, the invention includes the following embodiments.
[1] A quinacridone compound including a radioactive carbon atom ¹⁴C and having the structure represented by the following formula (B). 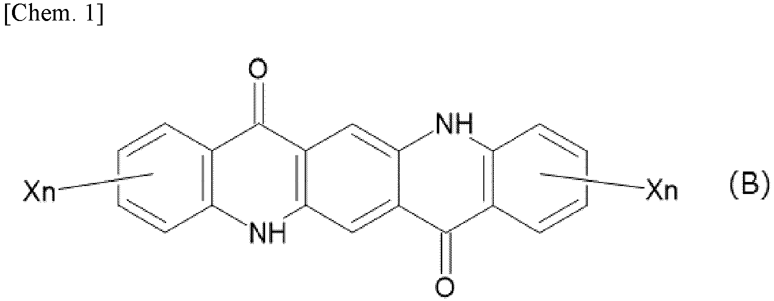 (In the formula (B), X each independently represents -Cl, -F, -Br, -I, -OH, -NO₂, a C1 to C12 alkyl group, a C1 to C12 alkoxy group, a phenyl group, -COOH, -COO- C1 to C12 alkyl, or -CO-NR, R each independently represents a hydrogen atom, an alkyl group, an alkenyl group, or a phenyl group, and n each independently represents 1 or 2.)
[2] The quinacridone compound described in [1], in which the quinacridone compound having the structure represented by the formula (B) is a quinacridone compound represented by the following formula (B-1) or (B-2). 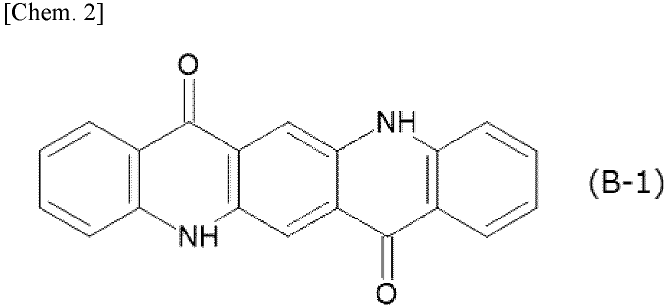 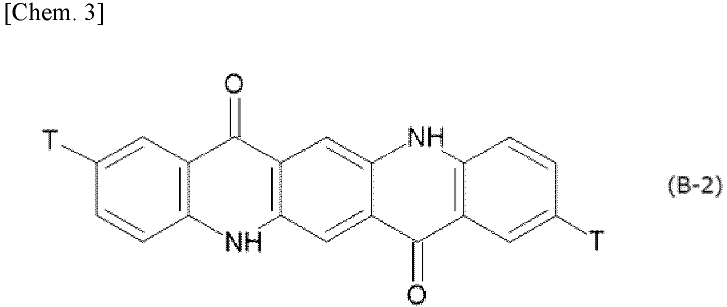 (In the formula (B-2), T is Cl, CH₃, or COOH.)
[3] A composition containing the quinacridone compound described in [1] or [2].
[4] The composition described in [3], which is to be used as a composition to be used as a pigment.
[5] The composition described in [3] or [4], in which the quinacridone compound having the structure represented by the formula (B) accounts for 70% by mass or more of the composition.
[6] A coloring composition including the composition described in [3] or [4] and a dispersive medium.
[7] The coloring composition described in [6], in which the quinacridone compound having the structure represented by the formula (B) accounts for 0.5% by mass to 50% by mass of the coloring composition.
[8] A method for producing a quinacridone compound including a radioactive carbon atom ¹⁴C and having the structure represented by the following formula (B): 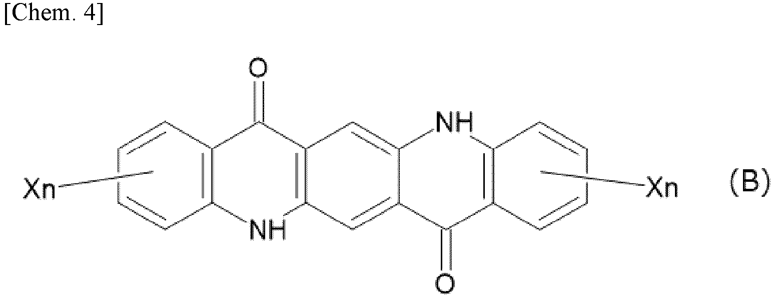 (in the formula (B), X each independently represents -Cl, -F, -Br, -I, -OH, -NO₂, a C1 to C12 alkyl group, a C1 to C12 alkoxy group, a phenyl group, -COOH, -COO- C1 to C12 alkyl, or -CO-NR, R each independently represents a hydrogen atom, an alkyl group, an alkenyl group, or a phenyl group, and n each independently represents 1 or 2),
   the method including:
   (B-i) producing an aniline which may have a substituent by using 4-aminobenzoic acid as a raw material;
   (B-ii) producing dimethyl-2,5-dihydroxycyclohexa-1,4-diene-1,4-dicarboxylate by using succinic acid as a raw material;
   provided that at least one of 4-aminobenzoic acid in (B-i) and succinic acid in (B-ii) is one derived from biomass; and
   (B-iii) reacting the aniline which may have a substituent produced in (B-i) with dimethyl-2,5-dihydroxycyclohexa-1,4-diene-1,4-dicarboxylate produced in (B-ii), thereby producing the quinacridone compound having the structure represented by the formula (B).

### ADVANTAGEOUS EFFECTS OF INVENTION

According to the invention, a quinacridone compound derived from biomass, which can be used as a bio-red pigment and is obtainable safely and through a clean, green, and carbon neutral approach, and a composition containing the compound can be provided.

### BRIEF DESCRIPTION OF DRAWINGS

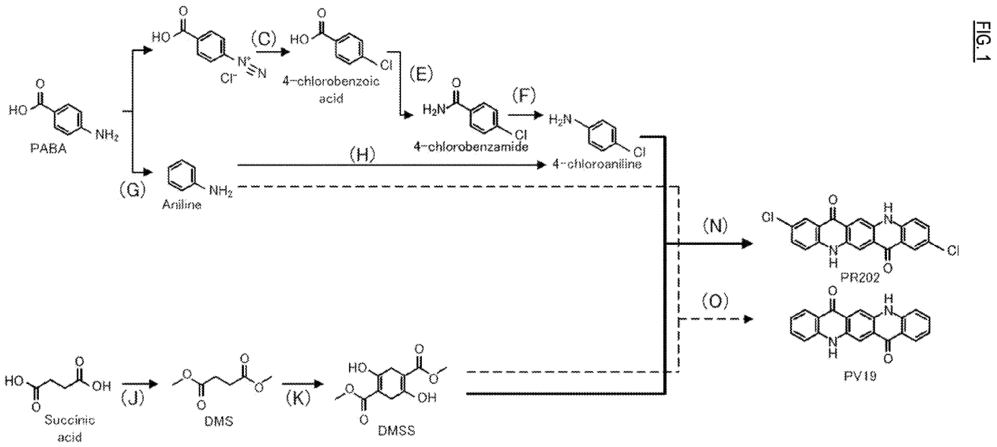

[Fig. 1] Fig. 1 is a schematic drawing to illustrate the step of producing a quinacridone compound derived from biomass.

### DESCRIPTION OF EMBODIMENTS

In the following, the invention is described in details. The following description on constitutional requirements is described as examples to illustrate the invention, and the invention is not limited to the contents thereof.

### <Quinacridone compound including a radioactive carbon atom ¹⁴C and having the structure represented by the following formula (B)>

The quinacridone compound of the invention includes a radioactive carbon atom ¹⁴C.

The quinacridone compound of the invention has the structure represented by the following formula (B).

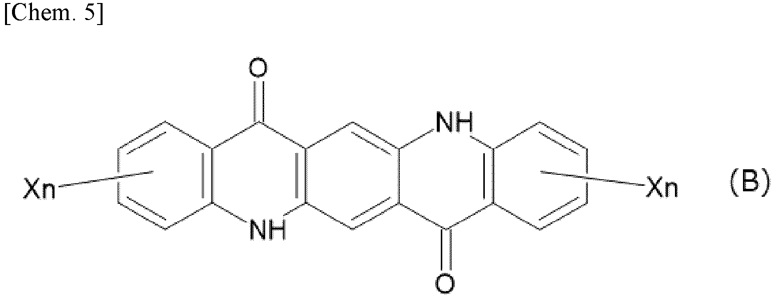

In the formula (B), X each independently represents -Cl, -F, -Br, -I, -OH, -NO₂, a C1 to C12 alkyl group, a C1 to C12 alkoxy group, a phenyl group, -COOH, -COO- C1 to C12 alkyl, or -CO-NR. R each independently represents a hydrogen atom, an alkyl group, an alkenyl group, or a phenyl group. n each independently represents 1 or 2.

The quinacridone compound of the invention can be produced by using 4-aminobenzoic acid derived from biomass and succinic acid derived from biomass as raw materials; and reacting an aniline which may have a substituent produced by using 4-aminobenzoic acid derived from biomass with dimethyl-2,5-dihydroxycyclohexa-1,4-diene-1,4-dicarboxylate produced by using succinic acid derived from biomass.

The quinacridone compound of the invention includes a bio (biomass) component derived from a biomass raw material. The inclusion of the bio component in the quinacridone compound of the invention can be confirmed, for example, by measuring a radioactive carbon atom ¹⁴C.

For example, the compound or composition derived from organism and the compound or composition derived from petroleum do not exhibit any difference in physical properties such as the molecular amount, mechanical properties, and thermal properties. In order to distinguish therebetween, a biomass degree is generally used. With respect to the biomass degree, the compound or composition derived from petroleum does not include ¹⁴C (radioactive carbon atom 14, half-life: 5730 years), and it can be confirmed whether the compound or composition generated is a compound derived from petroleum or a compound derived from biomass by measuring the concentration of ¹⁴C by an accelerator mass spectrometry.

For the measurement of the biomass degree, for example, a sample which is an object to be measured is burned so that carbon dioxide is generated, the carbon dioxide is purified through a vacuum line and then reduced with hydrogen in the presence of iron as a catalyst, thereby producing graphite.

Then, the graphite is installed in a ¹⁴C-AMS exclusive apparatus (NEC Corporation) including a tandem accelerator as a base, the count of ¹⁴C, the concentration of ¹³C (¹³C/¹²C), and the concentration of ¹⁴C (¹⁴C/¹²C) are measured, and from the obtained values, the proportion of the concentration of ¹⁴C in the sampled carbon to the concentration of standard modern carbon can be calculated. In the measurement, oxalic acid (HOxII) which National Institute of Standards and Technology (NIST) provides can be used as a standard sample.

As an index for evaluating the biomass degree, for example, pMC (percent Modern Carbon) may be recited.

The pMC (percent Modern Carbon) can be calculated by the measurement according to ASTM-D6866-18, and exhibits the proportion of the concentration of ¹⁴C in the object to the concentration of ¹⁴C in the standard modern carbon. In the case where the object includes no radioactive carbon atom ¹⁴C, the pMC is 0%.

As a preferred embodiment of the quinacridone compound having the structure represented by formula (B), for example, the quinacridone compound represented by formula (B-1) or (B-2) can be recited. 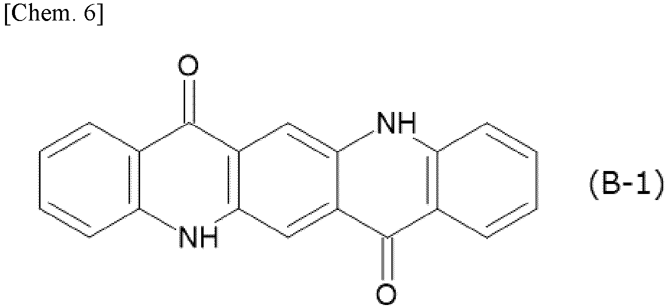 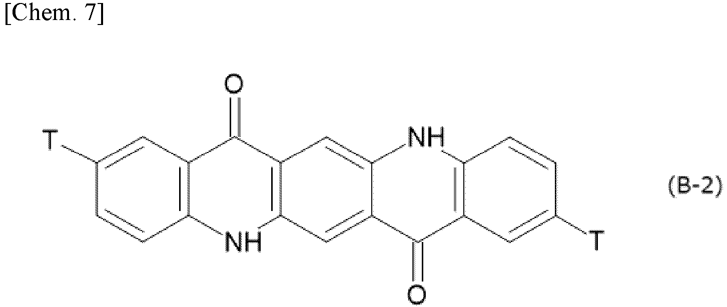 (In formula (B-2), T is Cl, CH₃, or COOH.)

The pMC (percent modern carbon) of the quinacridone compound represented by formula (B-1) or (B-2) is preferably 1% or more, more preferably 20% or more, more preferably 30% or more, more preferably 50% or more, more preferably 75% or more, more preferably 90% or more, further preferably 99% or more.

Incidentally, the quinacridone compound represented by formula (B-1) is known as a compound constituting a pigment called as Pigment Violet 19 (PV19), and the quinacridone compound represented by formula (B-2) is known as a compound constituting a pigment called as Pigment Red 202 (PR202).

The quinacridone compound of the invention having the structure represented by formula (B) or the composition containing the quinacridone compound can be used as a quinacridone red pigment including a radioactive carbon atom ¹⁴C, namely, a bio component.

### (Method for Producing Quinacridone Compound Having Structure Represented by Formula (B))

The quinacridone compound of the invention having the structure represented by formula (B) and including a radioactive carbon atom ¹⁴C, namely, a bio component, can be obtained as follows:
(B-i) producing an aniline which may have a substituent by using a 4-aminobenzoic acid as a raw material;
(B-ii) producing dimethyl-2,5-dihydroxycyclohexa-1,4-diene-1,4-dicarboxylate by using succinic acid as a raw material;
provided that at least one of 4-aminobenzoic acid in (B-i) and succinic acid in (B-ii) is one derived from biomass; and
(B-iii) reacting the aniline which may have a substituent produced in (B-i) with dimethyl-2,5-dihydroxycyclohexa-1,4-diene-1,4-dicarboxylate produced in (B-ii) to thereby produce the quinacridone compound having the structure represented by the formula (B).

With respect to 4-aminobenzoic acid and succinic acid as the raw materials, those derived from biomass obtained by fermentation of biomass, plant extraction, or thermal decomposition of biomass may be used.

With respect to the conventional synthesis of quinacridone, the typical synthetic route includes synthesizing from benzene and butane which are derived from fossil, and however, benzene is toxic to humans and harmful to the environment. Furthermore, the conventional synthesis method uses a petroleum raw material and therefore does not contribute to a carbon neutral program.

When aniline, which is to be used in the synthesis of quinacridone, is synthesized from benzene, for example, nitration of benzene with a mixed solution of concentrated acids (nitric acid and sulfuric acid) is necessary and subsequently, heating at 200 to 300°C is necessary to hydrogenate the obtained nitrobenzene, and thus, severe production conditions are imposed.

On the other hand, in the method for synthesizing the quinacridone compound disclosed in the invention, raw materials derived from plant may be used as raw materials, and with respect to at least either of 4-aminobenzoic acid or succinic acid, which is a raw material, bio-4-aminobenzoic acid or bio-succinic acid is used, and therefore, the method can contribute to a carbon neutral approach.

In the invention, in order to synthesize the quinacridone compound, 4-aminobenzoic acid and succinic acid are used as the raw materials. The synthesis of the quinacridone compound by using 4-aminobenzoic acid and succinic acid as starting materials is a new approach which is conventionally unemployed.

The quinacridone compound including the bio component of the invention, which is produced by using a bio-4-aminobenzoic acid or bio-succinic acid, has a crystallization structure and a particle size which are preferred for pigment formation.

Preferred embodiments of the method for producing the quinacridone compound having the structure represented by formula (B) include a production method of, particularly, the case where the quinacridone compound is a quinacridone compound represented by (B-1) or the quinacridone compound is a quinacridone compound represented by (B-2).

### <Method for Producing Quinacridone Compound Represented by Formula (B-1)>

First, the method for producing the quinacridone compound represented by formula (B-1) is described below (In the present description, the schematic drawing of Fig. 1 is referred in the description of the method for producing each compound). Incidentally, the production method described below is one in the case where both 4-aminobenzoic acid and succinic acid used as the raw materials are those derived from biomass.

### (B-ia) Aniline is produced by using 4-aminobenzoic acid derived from biomass (the following step (G))

As the method for producing aniline from 4-aminobenzoic acid, for example, the methods disclosed in JP2013-230913A and JP2016-222575A can be utilized to produce aniline. For example, it can be produced according to the method described in Example described later.

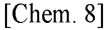

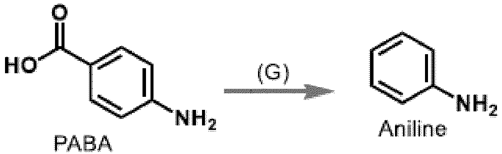

In the above step (G), aniline is produced from 4-aminobenzoic acid.

In the step (G), the reaction may be performed in either the nitrogen atmosphere or under the circumambient environment, i.e., so-called air atmosphere, and the nitrogen atmosphere is preferred in terms of preventing oxidation of the product. The heating temperature is preferably 170 to 250°C, more preferably 180 to 230°C, further preferably 190 to 210°C.

(B-iia) dimethyl succinate (in the present description, dimethyl succinate is sometimes abbreviated as "DMS") is obtained by using succinic acid as a raw material (the following step (J)), and subsequently, dimethyl-2,5-dihydroxycyclohexa-1.4dicarboxylate is produced (in the present description, dimethyl-2,5-dihydroxycyclohexa-1.4dicarboxylate is sometimes abbreviated as "DMSS") (the following step (K)).

As the method for producing dimethyl-2,5-dihydroxycyclohexa-1.4dicarboxylate from succinic acid, the methods disclosed in Chemistry-A European Journal (2020), 26(65), 14963-14968, Journal of polymer Science, Part A: Polymer Chemistry (2017), 55 (14), 2365-2372, CN102050738A or the like can be utilized to produce the compound. For example, the compound can be produced according to the method described in Example described later.

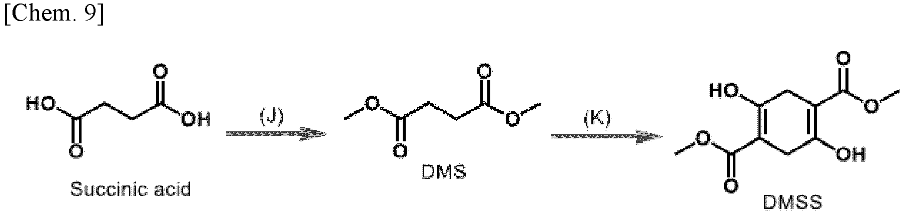

In the above step (J), dimethyl succinic acid is produced from succinic acid.

In the above step (J), examples of the usable catalyst acid include hydrochloric acid, sulfuric acid, formic acid, acetic acid, methanesulfonic acid, or p-toluenesulfonic acid. Among them, in terms of cost, hydrochloric acid or sulfuric acid is preferred.

In the above step (K), dimethyl-2,5-dihydroxycyclohexa-1,4-diene-1,4-dicarboxylate (DMSS) is produced from dimethyl succinate.

In the step (K), the dimerization temperature of dimethyl succinate is preferably 100 to 150°C, more preferably 120 to 130°C. Examples of the dimerization reagent include sodium methoxide, potassium methoxide, sodium tert-butoxide, potassium tert-butoxide, sodium hydride, and potassium hydride. Among them, in terms of cost and handling properties, sodium methoxide is preferred.
(B-iiia) The quinacridone compound represented by formula (B-1) is produced by reacting aniline produced in the above (B-ia) with dimethyl-2,5-dihydroxycyclohexa-1,4-diene-1,4-dicarboxylate produced in the above (B-iia) (the following step (O)).

The reaction method to react aniline with dimethyl-2,5-dihydroxycyclohexa-1,4-diene-1,4-dicarboxylate is not limited particularly, and the methods described in US20190177547A1, WO2005085364A1 and the like can be utilized to produce the quinacridone compound. For example, the quinacridone compound can be produced according to the method described in Example described later.

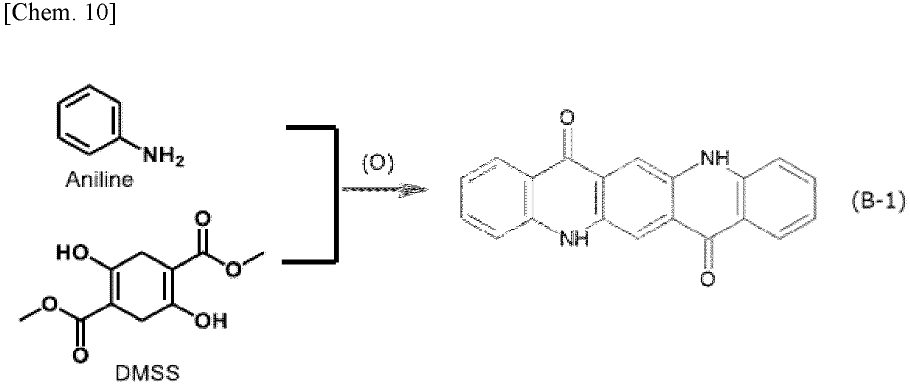

In the above step (O), the quinacridone compound represented by formula (B-1) (PV19 pigment) is produced by reacting aniline with dimethyl-2,5-dihydroxycyclohexa-1,4-diene-1,4-dicarboxylate.

In the step (O), examples of an acid necessary for the synthesis include hydrochloric acid, sulfuric acid, formic acid, acetic acid, methanesulfonic acid, or p-toluenesulfonic acid. Examples of the solvent include methanol, ethanol, isopropyl alcohol, butanol, and dodecyl alcohol, and with respect to these alcohols, one thereof may be used or two or more thereof may be used in combination. It is preferred that two or more of the alcohols are used in combination. The mixing rate of the solvent is preferably in the range of 1:0 to 0:1, more preferably in 5:1 to 1:5, further preferably in 2:1 to 1:2. The reaction time is preferably 1 to 12 hours, more preferably 2 to 10 hours, further preferably 3 to 8 hours. In the oxidation process, hydrochloric acid, sulfuric acid, formic acid, acetic acid, methanesulfonic acid, p-toluenesulfonic acid or the like may be used. The reaction time is preferably 1 to 12 hours, more preferably 2 to 10 hours, further preferably 3 to 8 hours. In the cyclization process (cyclocondensation reaction), the reaction temperature is preferably 100 to 200°C, more preferably 110 to 180°C, further preferably 120 to 150°C. The reaction time is preferably 1 to 8 hours, more preferably 2 to 6 hours, further preferably 3 to 5 hours. The concentration of polyphosphoric acid to be used in the cyclization process is preferably 100% or more, more preferably 105% or more, further preferably 115% or more.

### <Method for Producing Quinacridone Compound Represented by Formula (B-2)>

Next, the method for producing the quinacridone compound having the structure represented by formula (B-2) is described below (the schematic drawing of Fig. 1 is referred hereto).

In the following, the case where T in formula (B-2) is Cl is described as one embodiment.
(B-ib) 4-chlorobenzoic acid is obtained by using 4-aminobenzoic acid derived from biomass as a raw material (the following step (C)), subsequently, 4-chlorobenzamide is obtained (the following step (E), and 4-chloroaniline is produced (the following step (F)).

4-chloroaniline is produced from 4-aminobenzoic acid, and for example, can be produced by the method described in Example described later.

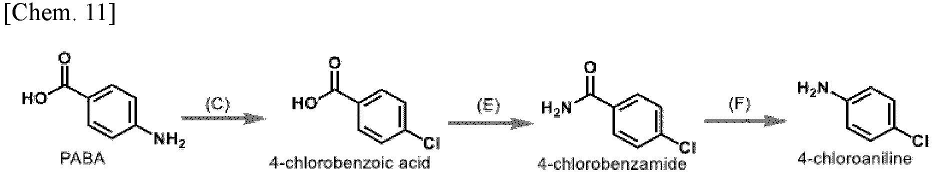

In the above step (C), according to Sandmeyer reaction, for example, 4-chlorobenzoic acid is produced from 4-aminobenzoic acid.

In the step (C), examples of an acid to be used include hydrochloric acid, sulfuric acid, formic acid, acetic acid, p-toluenesulfonic acid, and methanesulfonic acid. Among them, in terms of cost, hydrochloric acid, sulfuric acid or acetic acid is preferred. Examples of the usable solvent include water, acetonitrile, tetrahydrofuran, dimethyl sulfoxide, N,N-dimethylformamide, toluene, xylene, and alkylbenzene. While sodium hydroxide may be used to increase the dissolution rate of p-aminobenzoic acid, the reaction is possible without sodium hydroxide. The reaction time of diazotization is preferably 5 minutes to 4 hours, more preferably 20 minutes to 3 hours, further preferably 30 minutes to 2 hours. Examples of the chlorine source for exchanging the azo group for a chlorine group at the final stage include potassium chloride, lithium chloride, cuprous chloride, cupric chloride, tetraethylammonium trichloride, tetrabutylammonium trichloride, N-chlorosuccinimide, and trimethylsilyl chloride. Among them, in terms of handling properties, potassium chloride, lithium chloride, cuprous chloride, cupric chloride, and N-chlorosuccinimide are preferred.

In the above step (E), 4-chlorobenzamide is produced from 4-chlorobenzoic acid.

In the step (E), examples of a source of supplying ammonia include ammonia gas, ammonia water, and urea. Among them, in terms of the handling properties, urea is preferred. While molybdenum may be used as a catalyst for increasing the reaction rate, the reaction is possible without molybdenum. While a high boiling point solvent such as an alkylbenzene may be used in the synthesis, the reaction proceeds without the solvent. The reaction temperature is preferably 100 to 180°C, more preferably 130 to 150°C, further preferably 120 to 160°C. The suitable heating time is preferably 1 to 6 hours, more preferably 2 to 4 hours.

In the above step (F), through Hofmann elimination reaction, for example, 4-chloroaniline is produced from 4-chlorobenzamide.

In the step (F), the reaction solvent is a mixed solution of water and acetonitrile, and the proportion of acetonitrile is preferably more than 0 and less than 100%, more preferably 20 to 80%, further preferably 30 to 70%. As the reagent for inducing the Hofmann reaction, trichloroisocyanuric acid, tribromoisocyanuric acid, triiodoisocyanuric acid, or the like is employable. Among them, in terms of the availability of the reagent, trichloroisocyanuric acid and tribromoisocyanuric acid are preferred. The reaction time of the Hofmann reaction is preferably 30 minutes to 3 hours, more preferably 1 to 2 hours. The heating time necessary for the decomposition of carbamic acid is preferably 5 minutes to 3 hours, more preferably 10 minutes to 2 hours, further preferably 30 minutes to 1 hour.

As another embodiment of the above (B-ib), for example, 4-chloroaniline may be obtained by preparing aniline by using a biomass-derived 4-aminobenzoic acid as a raw material (the following step (G)), and subsequently producing 4-chloroaniline (the following step (H)).

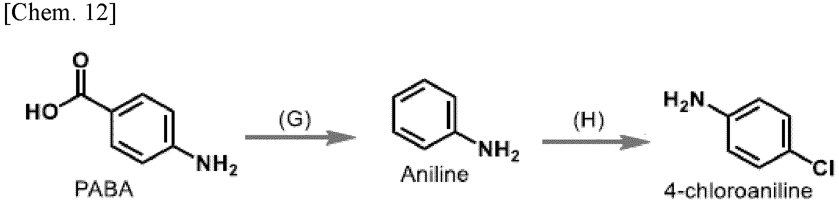

The above step (G) is as in the description of the step (G) in the item of <Method for Producing Quinacridone Compound Having Structure Represented by Formula (B-1) described above.

In the above step (H), 4-chloroaniline is produced from aniline.

In the step (H), cupper chloride and lithium chloride each may be anhydride or may include one or two of a crystal water. Examples of the solvent include methanol, ethanol, isopropyl alcohol, or butanol. The reaction time is preferably 3 to 24 hours, more preferably 5 to 20 hours, further preferably 8 to 15 hours, especially preferably 10 to 12 hours.
(B-iib) A biomass-derived succinic acid is used as a raw material to obtain dimethyl succinate (the following step (J)), and subsequently, dimethyl-2,5-dihydroxycyclohexa-1,4-diene-1,4-dicarboxylate (DMSS) is produced (the following step (K)).

With respect to a method for producing dimethyl-2,5-dihydroxycyclohexa-1,4-diene-1,4-dicarboxylate (DMSS) from succinic acid, the same method as described in the above (B-iia) is applicable for the production. The compound be produced by the method described in Example described later. 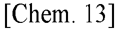 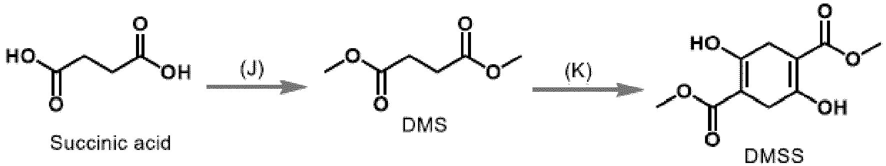 (B-iiib) The quinacridone compound represented by formula (B-2) is produced by reacting 4-chloroaniline produced in the above (B-ib) with dimethyl-2,5-dihydroxycyclohexa-1,4-diene-1,4-dicarboxylate produced in the above (B-iib) (the following step (N)).

With respect to a method of reacting 4-chloroaniline with dimethyl-2,5-dihydroxycyclohexa-1,4-diene-1,4-dicarboxylate, the same method as described in the above (B-iiia) is applicable for the production. For example, the compound can be produced by the method described in Example described later. 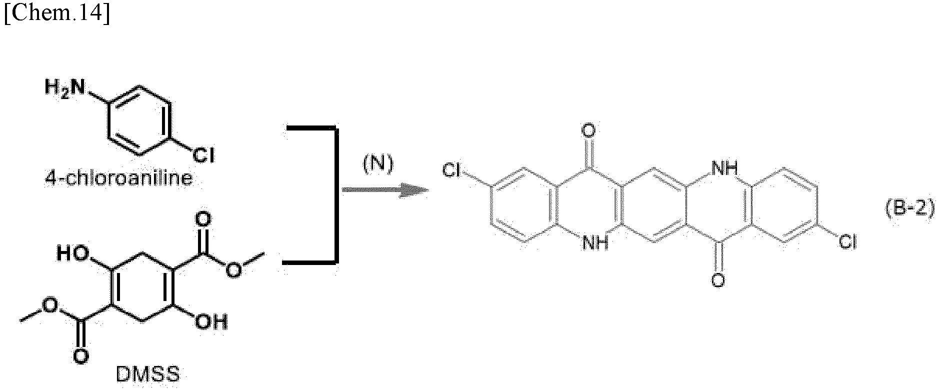 In the above step (N), 4-chloroaniline and dimethyl-2,5-dihydroxycyclohexa-1,4-diene-1,4-dicarboxylate are reacted according to the same method as described in the above (B-iiia), thereby producing the quinacridone compound represented by formula (B-2) where T = Cl (PR202 Pigment).

The above 4-aminobenzoic acid to be used as a raw material is preferably biomass-derived as described above, and the above succinic acid to be used as a raw material is preferably biomass-derived as described above.

It is more preferred that both the above 4-aminobenzoic acid and the above succinic acid are biomass-derived.

The biomass degree of the raw material to be used in the above production method is preferably 1% or more, more preferably 50% or more, more preferably 75% or more, more preferably 90% or more, further preferably 99% or more. Further, in the case where the biomass raw material is available according to a Mass Balance system or a Book & Claim system, it is easy to prepare a biomass raw material having a biomass degree of not less than 1% and up to 100%. With respect to the biomass degree in the present description for patent, the biomass degree of the biomass raw material obtained according to a Mass Balance system or a Book & Claim system is applicable.

### (Composition Containing Quinacridone Compound)

The invention may be a composition containing the quinacridone compound of the invention having the structure represented by formula (B).

The composition can be preferably used as a composition to be used as a pigment, especially, a quinacridone red pigment.

The composition of the invention may contain one or two or more of the quinacridone compound having the structure represented by formula (B).

As a preferred embodiment of the composition of the invention, for example, a composition containing the quinacridone compound represented by formula (B-1) or the quinacridone compound represented by formula (B-2) is employable.

In the case where the composition is a pigment composition, the quinacridone compound having the structure represented by formula (B) (more preferably the quinacridone compound represented by formula (B-1) or (B-2)) accounts for preferably 70% by mass or more, more preferably 80% by mass or more, further preferably 90% by mass or more, of the composition.

The BET value of the composition of the invention is preferably 20 to 100 m²/g, preferably 30 to 95 m²/g, preferably 40 to 90 m²/g, preferably 50 to 85 m²/g. In particular, it is preferably 20 to 80 m²/g in an application for inks, it is preferably 40 to 90 m²/g in an application for coating materials, it is preferably 50 to 90 m²/g in an application for resins, and it is preferably 50 to 100 m²/g in an application for color filters. The BET value can be measured by measuring and placing 0.1 g of a pigment in a measurement cell, and setting the measurement cell in a specific area meter (Macsorb 1208).

### (Application of Quinacridone Compound of Present Invention)

The quinacridone compound of the invention including a radioactive carbon atom ¹⁴C and having the structure represented by formula (B), and the composition of the invention containing the quinacridone compound, which are obtained according to the above methods, constitute a quinacridone red pigment such as PV19 or PR202.

The quinacridone compound of the invention includes a biomass-derived carbon, and contributes to reduction of burden on the environment due to carbon neutral.

The quinacridone compound of the invention, and the quinacridone red pigment composed of the composition containing the quinacridone compound can be used as a coloring composition, a composition for molding, or the like.

Further, the quinacridone compound of the invention, and the quinacridone red pigment composed of the composition containing the quinacridone compound may be mixed with the other resin, a rubber, an additive, a solvent, a pigment, a dyestuff, or the like, depending on the necessity, and are adjusted to obtain cosmetics, coating materials or printing markers for medicine or agricultural chemical, stationery, writing instruments, printing inks, inkjet inks, metal inks, paints, plastic colorants, toners (color toners), color filters, or the like, and used.

### <Coloring Composition>

The coloring composition of the invention preferably contains the quinacridone compound of the invention or the quinacridone red pigment composed of the composition containing the quinacridone compound, and a dispersive medium.

The coloring composition of the invention contains the quinacridone compound having the structure represented by formula (B) preferably in an amount of 0.5% by mass to 50% by mass, more preferably 2.5% by mass to 35% by mass, further preferably 5% by mass to 20% by mass.

### <<Dispersive Medium>>

Examples of the dispersive medium includes a resin and a solvent. Examples of the resin include a resin-type dispersive medium, and a binder resin. Example of the solvent include water and an organic solvent. Further, a low molecular dispersant such as a surfactant may be used depending on the necessity.

The kinds of the resin for the resin-type dispersant include a styrene-(meth)acrylic acid copolymer, a (meth)acrylic acid-(meth)acrylic acid alkyl ester copolymer, a styrene-(meth)acrylic acid-(meth)acrylic acid alkyl ester copolymer, a styrene-α-methylstyrene-(meth)acrylic acid copolymer, a styrene-α-methylstyrene-(meth)acrylic acid-(meth)acrylic acid alkyl ester copolymer, a poly(meth)acrylic acid, a vinylnaphthalene-(meth)acrylic acid copolymer, a styrene-maleic acid copolymer, a maleic acid-maleic anhydride copolymer, an α-olefin-maleic acid (anhydride) copolymer, an α-olefin-maleic acid (anhydride)-polyalkylene glycol allyl ether copolymer, a vinylnaphthalene-maleic acid copolymer, a polyester-modified (meth)acrylic acid polymer, and salts thereof.

Incidentally, the form of the resin for the resin-type dispersant is, for example, a water-soluble resin, an emulsion (water-insoluble resin).

The binder resin may be a polyolefin resin, a polyester resin, a styrene copolymer, an acrylic resin, and modified resins of them, for example. The specific examples thereof include polyolefin resins such as a polyethylene, e.g., a high density polyethylene (HDPE), a linear low density polyethylene (L-LDPE), and a low density polyethylene (LDPE), and polypropylene; polyester resins, such as polyethylene terephthalate; styrene copolymers such as a styrene-p-chlorostyrene copolymer, a styrene-vinyl toluene copolymer, a styrene-vinyl naphthalene copolymer, a styrene-acrylic acid ester copolymer, a styrene-methacrylic acid ester copolymer, a styrene-α-chloromethyl methacrylate copolymer, a styrene-acrylonitrile copolymer, a styrene-vinyl methyl ether copolymer, a styrene-vinyl ethyl ether copolymer, a styrene-vinyl methyl ketone copolymer, a styrene-butadiene copolymer, a styrene-isoprene copolymers, and a styrene-acrylonitrile-indene copolymers; acrylic resins such as an acrylic resin and a methacrylic resin; polyvinyl chloride, phenolic resins, naturally modified phenolic resins, naturally modified maleic acid resins, polyvinyl acetate, silicone resins, polyurethane resins, ethylene-vinyl acetate copolymer resins, vinyl acetate resins, nitrocellulose resins, polyamide resins, epoxy resins, xylene resins, polyvinyl butyral resins, polyvinyl acetal resins, cellulose ester resins, alkyd resins, rosin resins, ketone resins, cyclized rubbers, chlorinated polyolefin resins, terpene resins, coumarone-indene resins, alkyd resins, amino resins, petroleum resins, and modified resins of them.

The organic solvent is classified into a water-soluble solvent and a water-insoluble solvent.

Examples of the water-soluble solvent include ethanol, n-propanol, isopropanol, isobutanol, ethylene glycol, diethylene glycol, triethylene glycol, propylene glycol, and glycerin. Examples of the water-soluble solvent include toluene, xylene, butyl acetate, methyl acetate, methyl ethyl ketone, methyl isobutyl ketone, butyl alcohol, and aliphatic hydrocarbons.

With respect to each of the raw materials which constitute the coloring composition, one thereof may be used or two or more thereof may be used in combination.

### <Molding Composition>

The molding composition includes a coloring composition (a pigment composition, a resin). The molding composition preferably contains a thermoplastic resin as the resin. It is preferred that the molding composition containing a thermoplastic resin is melt·kneaded, and molded into a shape desired, thereby producing a molded article.

Examples of the thermoplastic resin include a homopolymer or a copolymer, where ethylene, propylene, butylene, styrene, or the like is used as a monomer component. More specific examples thereof include a polyolefin resin such as polyethylene including a high density polyethylene (HDPE), a linear low density polyethylene (L-LDPE), and a low density polyethylene (LDPE), polypropylene, or polybutylene. Examples of the other useful resin include a polyester resin such as polyethylene terephthalate, a polyamide resin such as nylon 6, and nylon 66, a polystyrene resin, and a thermoplastic ionomer resin. Among them, a polyolefin resin and a polyester resin are preferred. Incidentally, the number average molecular weight of the thermoplastic resin is preferably more than 30,000 and not more than 200,000.

The molding composition may contain a wax. The wax is composed of polyolefins having a low molecular amount. These are polymers of an olefin such as ethylene, propylene, or butylene, and may be a block or random copolymer, or a terpolymer. Examples thereof include a polymer of α-olefins such as a low density polyethylene (LDPE), a high density polyethylene (HDPE), or polypropylene (PP).

The number average molecular weight of the wax is preferably 1,000 to 30,000, more preferably 2,000 to 25,000. Falling within the range, the wax transfers onto the surface of the molded article appropriately, and therefore, the balance between the sliding properties and the bleed-out suppression is excellent.

The melting point of the wax is preferably 60 to 150°C, more preferably 70 to 140°C. Falling within the range, the processability at melting and kneading the thermoplastic resin and the wax is good.

The molding composition may contain the other additives. The other additives are raw materials to be used generally in the technical field of the molding article, and examples thereof include an antioxidant, a light stabilizer, a dispersing agent, a metal soap, an antistatic agent, a flame retardant, a lubricant, a filler, and a colorant other than the quinacridone compound of the invention.

The molding composition may be produced, for example, as a master batch containing the quinacridone compound in a high concentration.

It is preferred that the master batch is produced, for example, by melting and kneading the thermoplastic resin and the pigment composition, and subsequently molding into an arbitrary shape so as to facilitate the use in the subsequent step. Then, the master butch and a resin for dilution (for example, the thermoplastic resin used for the master batch) are melted and kneaded, and can be molded into a desired shape. Examples of the shape of the master batch include pellet-shape, powder shape, and plate shape. For inhibiting the pigment composition from agglomerating, it is preferred that a dispersion where the pigment composition and the wax are melted and kneaded is produced in advance and the dispersion is melted and kneaded together with the thermoplastic resin to thereby produce a master batch. As the apparatus to be used for the dispersion, for example, a blend mixer, a three-roll mill, or the like is preferred.

The application of the molding composition is, for example, a plastic molded article, a sheet, or a film.

### <Toner>

The toner contains a coloring composition (a pigment composition, a resin). The resin used in the toner is referred to as "a binder resin", and is preferably a thermoplastic resin. Examples of the toner include a dry toner and a wet toner. For example, the dry toner can be produced by melting and kneading the pigment composition and the binder resin, cooling, then pulverizing, and subjecting the resultant to a classification step and subsequently to a post-treatment step of compounding and mixing an additive therewith.

Examples of the binder resin include a styrene-p-chlorostyrene copolymer, a styrene-vinyltoluene copolymer, a styrene-vinylnaphthalene copolymer, a styrene-(meth)acrylic acid ester copolymer, a styrene-α-chloromethyl methacrylate copolymer, a styrene-acrylonitrile copolymer, a styrene-vinyl methyl ether copolymer, a styrene-vinyl ethyl ether copolymer, a styrene-vinyl methyl ketone copolymer, a styrene-butadiene copolymer, a styrene-isoprene copolymer, a styrene-acrylonitrile-indene copolymer, polyvinyl chloride, a phenolic resin, a naturally modified phenolic resin, a naturally resin modified maleic acid resin, a (meth)acrylic resin, polyvinyl acetate, a silicone resin, a polyester resin, polyurethane, a polyamide resin, a furan resin, an epoxy resin, a xylene resin, polyvinyl butyral, a terpene resin, a coumarone-indene resin, and a petroleum-based resin.

Among them, a polyester resin and a styrene copolymer are preferred, and a polyester resin is more preferred. The pigment composition is particularly excellent in compatibility with a polyester resin, and therefore, the quinacridone compound is uniformly and finely dispersed in the toner, so that a toner having a high quality can be obtained.

The weight average molecular weight (Mw) of the polyester resin is preferably 5,000 or more, more preferably 10,000 to 1,000,000, further preferably 20,000 to 100,000. The use of the polyester resin having an appropriate Mw can provide a toner good in offset resistance and low-temperature fixability.

The acid value of the polyester resin is preferably 10 to 60 mgKOH/g, more preferably 15 to 55 mgKOH/g. The use of the polyester resin having an appropriate acid value easily suppress the release of the releasing agent, and the image density in a high humidity environment is hardly lowered.

The toner may further contain a charge-controlling agent. The use of the charge-controlling agent facilitates a stable charge amount of the toner. As the charge-controlling agent, a charge-controlling agent having a positive charge or a negative charge may be selected appropriately and used.

The toner may contain a releasing agent. Examples of the releasing agent include hydrocarbon waxes such as polypropylene wax, polyethylene wax and Fischer-Tropsch wax, synthetic ester waxes, and natural ester waxes such as carnauba wax and rice wax.

The toner may contain a lubricant, a fluidizing agent, an abrasive, a conductivity-imparting agent, an image peeling prevention agent, or the like, depending on the necessity.

Further, the toner may be used for a one-component developer or a two-component developer. The two-component developer may further contain a carrier.

Examples of the carrier include magnetic powders such as iron powder, ferrite powder, and nickel powder, and a coated product where the surface of the magnetic powder is coated with a resin, etc. Examples of the resin which the carrier surface is coated with include a styrene-(meth)acrylic ester copolymer, a (meth)acrylic ester copolymer, a fluorine-containing resin, a silicone-containing resin, a polyamide resin, an ionomer resin, and a polyphenylene sulfide resin.

The coating material contains a coloring composition (a pigment composition, a resin, a solvent).

Examples of the resin include a thermosetting resin and a thermoplastic resin. The thermosetting resin is preferably a thermosetting resin having a glass transition temperature of 10°C or more. The kinds of the thermosetting resin include an acrylic resin, a polyester, and a polyurethane. Incidentally, the thermosetting resin preferably has a functional group reactable with a curing agent. Examples of the functional group include a carboxy group and a hydroxy group. Examples of the curing agent include an isocyanate curing agent, an epoxy curing agent, an aziridine curing agent, and an amine curing agent.

The thermoplastic resin is preferably a resin having a glass transition temperature of 30°C or more. Examples of the thermoplastic resin include nitrocellulose and polyester. Incidentally, the thermosetting resin and the thermoplastic resin may be used in combination.

Examples of the water-insoluble solvent as the solvent include toluene, xylene, butyl acetate, methyl acetate, methyl ethyl ketone, methyl isobutyl ketone, butyl alcohol, and an aliphatic hydrocarbon.

Examples of the water-soluble solvent as the solvent include water, monohydric alcohol, dihydric alcohol, and glycol. Examples of the water-soluble solvent include ethanol, n-propanol, isopropanol, isobutanol, ethylene glycol, diethylene glycol, triethylene glycol, propylene glycol, and glycerin. Further, a water-dilutable monoether derived from a polyhydric alcohol is also employable. Examples thereof include methxypropanol and methoxybuthanol. Further, examples thereof include a water-diluted glycolether such as butylglycol or butyldiglycol. Further, the coating material including water as a solvent is referred to as "aqueous coating material".

The coating material may further contain known additives.

Examples of the application of the coating material include a coating material for metals and a coating material for plastics.

### <Printing Ink>

The printing ink includes a coloring composition (a pigment composition, a resin, a solvent). The printing ink is an ink other than an inkjet ink, and examples thereof include an offset printing ink, a flexographic printing ink, a gravure printing ink, a silk screen printing ink, and an ink for a color filter. Incidentally, an ink including water is referred to as an aqueous printing ink.

Examples of the resin include a rosin resin, a rosin-modified phenol resin, polyurethane, nitrocellulose, an acrylic resin, a styrene- acrylic resin, and a petroleum resin.

Examples of the water-insoluble solvent as the solvent include toluene, xylene, butyl acetate, methyl acetate, methyl ethyl ketone, methyl isobutyl ketone, butyl alcohol, and an aliphatic hydrocarbon.

Examples of the water-soluble solvent as the solvent include ethanol, n-propanol, isopropanol, isobutanol, ethylene glycol, diethylene glycol, triethylene glycol, propylene glycol, and glycerin. Further, a water-dilutable monoether derived from a polyhydric alcohol is also employable. Examples thereof include methoxypropanol and methoxybuthanol. Further, examples thereof include a water-diluted glycolether such as butylglycol or butyldiglycol.

The printing ink may further contain a radiant material. The radiant material is a powder having an average thickness of 0.5 to 10 µm and an average particle size of 5 to 50 µm, and examples thereof include a metal flake, mica, and a coated glass flake. Examples of the metal flake include aluminum flake and gold dust. Examples of mica include normal mica and coated mica. Examples of the coated glass flake include a glass flake coated with a metal oxide such as titanium oxide.

The printing ink may further contain known additives.

### <Inkjet Ink>

The inkjet ink includes the pigment composition and a resin, and preferably includes a solvent in addition. The inkjet ink is classified broadly into a (solution type) inkjet ink, an aqueous inkjet ink, and a solventless inkjet ink depending on the presence or absence of the solvent, or the kind thereof.

In the following, the aqueous inkjet ink is mainly described.

The resin to be used in the aqueous inkjet ink is important in terms of imparting a fixability onto a material to be printed (base material) to the aqueous inkjet ink.

The kinds of the resin include an acrylic resin, a styrene-acrylic resin, a polyester resin, a polyamide resin, and a polyurethane resin. Incidentally, the form of the resin is a water-soluble resin, an emulsion particle, or the like. Among them, an emulsion particle is preferred. The emulsion particle may be a single composition particle, a core/shell particle, or the like, which may be selected arbitrarily and used. The use of the emulsion particle facilitates the aqueous inkjet ink having a low viscosity, so that a recorded matter having excellent water resistance can be easily obtained. The resin may be used after an acidic functional group of the resin is neutralized with a pH adjuster, such as ammonia, amines and inorganic alkalis, depending on the necessity.

Examples of the solvent include a water-insoluble solvent, water, and a water-soluble solvent. Examples of the water-soluble solvent include glycol ethers and diols. These solvents so rapidly penetrate into the base material, and rapidly penetrate into a low liquid-absorbing or non-liquid-absorbing base material, such as coat paper, art paper, vinyl chloride sheet, film, or cloth, as well. Therefore, dry at printing is fast and accurate printing is realized. In addition, because of the high boiling point, the solvents function as a moistening agent.

The water-soluble solvent is important from the viewpoint of preventing an aqueous inkjet ink at the nozzle portion of the printer head from drying and solidifying and providing ejection stability of the ink. Examples of the water-soluble solvent include ethylene glycol, diethylene glycol, propylene glycol, triethylene glycol, polyethylene glycol, glycerin, tetraethylene glycol, dipropylene glycol, ketone alcohol, diethylene glycol monobutyl ether, ethylene glycol monobutyl ether, ethylene glycol monoethyl ether, 1,2-hexanediol, N-methyl-2-pyrrolidone, substituted pyrrolidone, 2,4,6-hexanetriol, tetrafurfuryl alcohol, and 4-methoxy-4 methylpentanone.

The inkjet ink may further contain an additive. Examples of the additive include a a drying accelerator, a penetrant, a preservative, a chelating agent, and a pH adjuster.

The inkjet ink may be prepared by compounding and mixing the respective raw materials. For mixing, stirrers with a blade, various dispensers, emulsifiers, and the like are employable. With respect to each material, the addition order and the mixing method are arbitrary.

After mixing, it is preferred to remove the coarse particles from the inkjet ink through filtration or certification. This causes the good discharge from the inkjet printer. With respect to the filtration or certification, known methods are employable.

For the inkjet ink, various inkjet printing systems are employable. Examples of the inkjet printing system include a charge control type, a continuous injection type such as a spray type, a piezo system, a thermal system, and an electrostatic suction system.

### EXAMPLES

In the following, the invention is further described referring to Examples, but the invention is not limited to the examples. Further, "%" with respect to the compositions of the following examples means "% by mass".

### (Composition Analysis)

The composition of each dye obtained in the working examples was analyzed by FD-MS (Field Desorption-Mass Spectroscopy). Five milligrams of each dye were dispersed in THF, and the resultant was subjected to an analysis by means of JMS-T100GC (manufactured by JEOL Ltd.).

### (Accelerator Mass Spectrometry (AMS Method))

A count of ¹⁴C, ¹³C concentration (¹³C/¹²C), ¹⁴C concentration (¹⁴C/¹²C) were measured by a ¹⁴C-AMS exclusive apparatus (NEC Corporation) including a tandem accelerator as a base.

In the measurement, oxalic acid (HOxII) which National Institute of Standards and Technology (NIST) provides was used as a standard sample. The measurement of this standard sample and the measurement of the background sample were performed simultaneously. pMC (percent Modern Carbon) exhibits the proportion of the concentration of ¹⁴C of the sample carbon to the standard modern carbon.

### (C) Synthesis of 4-chlorobenzoic acid from 4-aminobenzoic acid

Into a flask including 4-amino benzoic acid (10 g) dissolved in 73 mL of a 1M aqueous solution of NaOH and being immersed in an ice bath, a 37% hydrochloric acid (25 g) was added dropwise. Subsequently, 6.04 g of sodium nitrate was added thereto, and the resulting solution mixture in the ice bath was stirred for 30 minutes. Then, 15.7 g of CuCl₂ was added thereto, and the reaction mixture was heated at 60°C until the generation of nitrogen gas was not confirmed. After cooling the reaction mixture to room temperature, cold water was added thereto, and extraction was performed with ethyl acetate (3 × 100 mL). The added ethyl acetate was washed with a saline solution, and dried over anhydrous sodium sulfate, and then filtration was performed. The solvent was vaporized, and the obtained solid was dried in an oven for one night, thus obtaining 9.8 g of the solid.

### (E) Synthesis of 4-Chlorobenzamide

4-chlorobenzoic acid (10g) was mixed with 5.4 g of urea and 0.06 g of a molybdenum catalyst in 50 mL of alkylbenzene. The reaction mixture was heated at 150°C for 2 hours. After cooling down to room temperature, the solid was taken by filtration, and washed sufficiently with water. The solid was dried one night in an oven, thereby obtaining 8.9 g of the solid.

### (F) Synthesis of 4-Chloroaniline from 4-Chlorobenzamide

4-Chlorobenzamide (10 g) in water (48 mL), a solution of NaOH (8.7 g), and acetonitrile (80 mL) were poured into a cold suspension of trichloroisocyanuric acid (82 g) in water (32 mL). The resulting mixture was stirred at 0°C for 1 hour, and subsequently, heated under reflux for 30 minutes. The reaction mixture was cooled to room temperature, the solid was taken by filtration, and the filtrate was extracted with ethyl acetate (3 × 100 mL). The added ethyl acetate was washed with a saline solution, and dried over anhydrous sodium sulfate, and filtration was performed. The solvent was vaporized, and the obtained solid was dried in an oven for one night, thus obtaining 7.9 g of the solid.

### (G) Synthesis of Aniline from 4-Aminobenzoic acid

4-Aminobenzoic acid (10 g) was added in a flask equipped with a distillation apparatus, the inside atmosphere was replaced by nitrogen, the reaction mixture was stirred and heated at 200°C for 0.5 hour. Thus, 5,4 g of liquid was collected in the distillation apparatus.

### (H) Synthesis of 4-Chloroaniline from Aniline

Aniline (10 g), CuCl₂·2H₂O (54.9 g), LiCl·H₂O (6.5 g), and ethanol (200 mL) were charged in a flask. The obtained reaction mixture was refluxed for 10 hours. After the completion of the reaction, ethanol was removed under reduced pressure. Subsequently, a 28% aqueous solution of ammonium hydroxide (194 mL) and water (500 mL) were added thereto, and the water phase was extracted with ethyl acetate (100 mL × 3). The added ethyl acetate was washed with a saline solution, and dried over anhydrous sodium sulfate, and filtration was performed. The solvent was vaporized, and the obtained solid was dried in an oven for one night, thus obtaining 11.4 g of the solid.

### (J) Synthesis of Dimethyl Succinate

A solution of methanol (150 mL) and 98% H₂SO₄ (0.42 g) containing succinic acid (10 g) derived from biomass was stirred under reflux for 15 hours. The solvent was removed under reduced pressure. The generated product was dissolved in dichloromethane (40 mL), and the organic solution was washed with water (50 mL × 3). Subsequently, this solution was dried over magnesium sulfate, and the solvent was evaporated, thereby obtaining 11.8 g of liquid.

### (K) Synthesis of Dimethyl-2,5-dihydroxycyclohexa-1,4-diene-1,4-dicarboxylate (DMSS)

Dimethyl succinate (10 g) was added in a flask equipped with a distillation apparatus, and heated at 120°C under the nitrogen condition, a 28% sodium methoxide (NaOMe)(2.9 g) was added thereto over 1 hour while distillation and removal of methanol were conducted, and after the completion, the reaction mixture was kept at 120°C for 30 minutes. Then, 15% H₂SO₄ (5.0 g) was slowly added dropwise over 30 minutes, while the reaction mixture was kept at 10 to 20°C. Water (1.5 g) was added thereto and the resultant was stirred for 30 minutes. The solid was taken by filtration, and washed with water sufficiently. The solid obtained after the filtration was dried in an oven for one night, thus obtaining 12.8 g of the solid.

### (O) Synthesis of PV19

Into a flask containing dimethyl-2,5-dihydroxycyclohexa-1,4-diene-1,4-dicarboxylate (DMSS) (10 g), aniline (8.6 g), isopropyl alcohol (29.7 g) and methanol (14.9 g), a 37% hydrochloric acid (0.4 g) was added. The reaction mixture was refluxed for 5 hours. Subsequently, nitrobenzene (4.2 g), a 48% NaOH (15.1 g) and water (5.0 g) were added thereto and the resultant was refluxed for 4 hours. After the reaction mixture was slightly cooled, a 37% hydrochloric acid (18.0 g) was added thereto. The solid was taken by filtration, and washed sufficiently with water. The solid, which was dried one night, was stirred in a 115% polyphosphoric acid (70.2 g) at 120°C for 3 hours. After the completion, the reaction mixture was poured in an ice water, and the solid was taken by filtration, washed with water sufficiently, and dried one night in an oven, thereby obtaining 9.0 g of the solid.

Thus, the quinacridone compound represented by the above formula (B-1) including a radioactive carbon atom ¹⁴C and having a pMC of 34% was obtained.

### Synthesis of PR122

Into a flask containing dimethyl-2,5-dihydroxycyclohexa-1,4-diene-1,4-dicarboxylate (DMSS) (10 g), p-toluidine (9.9 g), isopropyl alcohol (29.7 g) and methanol (14.9 g), a 37% hydrochloric acid (0.4 g) was added. The reaction mixture was refluxed for 5 hours. Subsequently, nitrobenzene (4.2 g), a 48% NaOH (15.1 g) and water (5.0 g) were added thereto and the resultant was refluxed for 4 hours. After the reaction mixture was slightly cooled, a 37% hydrochloric acid (18.0 g) was added thereto. The solid was taken by filtration, and washed sufficiently with water. The solid, which was dried one night, was stirred in a 115% polyphosphoric acid (70.2 g) at 120°C for 3 hours. After the completion, the reaction mixture was poured in an ice water, and the solid was taken by filtration, washed sufficiently with water, and dried one night in an oven, thereby obtaining 11.0 g of the solid.

Thus, the quinacridone compound represented by the above formula (B-2), wherein T is CH₃, including a radioactive carbon atom ¹⁴C and having a pMC of 31% was obtained.

### (N) Synthesis of PR202

Into a flask containing dimethyl-2,5-dihydroxycyclohexa-1,4-diene-1,4-dicarboxylate (DMSS) (10 g), 4-chloroaniline (11.8 g), isopropyl alcohol (29.7 g) and methanol (14.9 g), a 37% hydrochloric acid (0.4 g) was added. The reaction mixture was refluxed for 5 hours. Subsequently, nitrobenzene (4.2 g), a 48% NaOH (15.1 g) and water (5.0 g) were added thereto and the resultant was refluxed for 4 hours. After the reaction mixture was slightly cooled, a 37% hydrochloric acid (18.0 g) was added thereto. The solid was taken by filtration, and washed sufficiently with water. The solid, which was dried one night, was stirred in a 115% polyphosphoric acid (98.7 g) at 120°C for 3 hours. After the completion, the reaction mixture was cooled to room temperature and poured into water, and the solid was taken by filtration, washed sufficiently with water, and dried one night in an oven, thereby obtaining 10.5 g of the solid.

Thus, the quinacridone compound represented by the above formula (B-2), wherein T is Cl, including a radioactive carbon atom ¹⁴C and having a pMC of 34% was obtained.

The quinacridone compound represented by the above formula (B-1) was obtained in the same method as described above except for using succinic acid derived from petroleum instead in synthesizing dimethyl succinate, and with respect to the obtained quinacridone compound, the radioactive carbon atom ¹⁴C was less than the detectable value and could not be measured, and further, the pMC was 0%.

## Claims

1. A quinacridone compound including a radioactive carbon atom ¹⁴C and having the structure represented by the following formula (B): 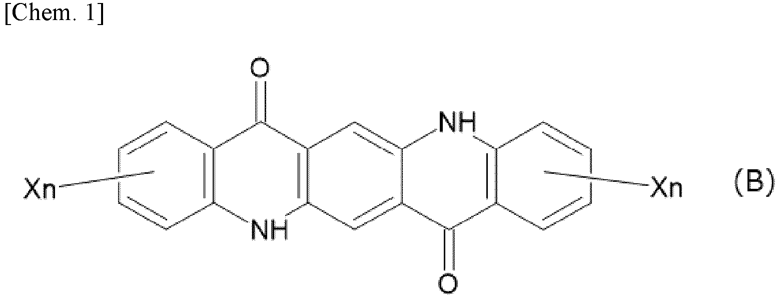 wherein X each independently represents -Cl, -F, -Br, -I, -OH, -NO₂, a C1 to C12 alkyl group, a C1 to C12 alkoxy group, a phenyl group, -COOH, -COO- C1 to C12 alkyl, or - CO-NR, R each independently represents a hydrogen atom, an alkyl group, an alkenyl group, or a phenyl group, and n each independently represents 1 or 2.

2. The quinacridone compound according to claim 1, wherein the quinacridone compound having the structure represented by the formula (B) is a quinacridone compound represented by the following formula (B-1) or (B-2): 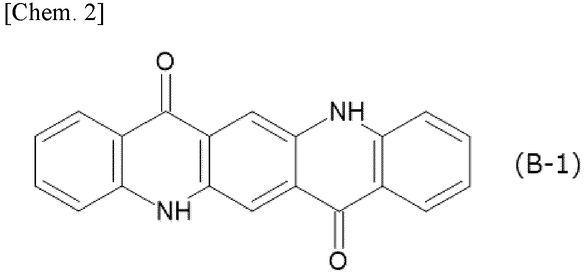 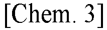 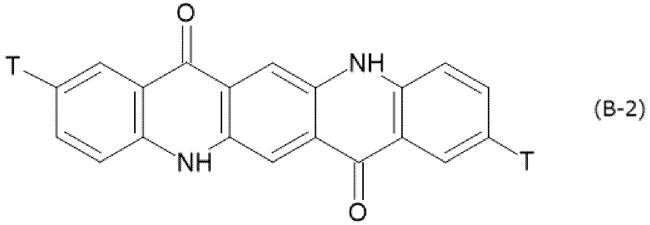 wherein T is Cl, CH₃, or COOH.

3. A composition comprising the quinacridone compound according to claim 1.

4. The composition according to claim 3, which is to be used as a composition to be used as a pigment.

5. The composition according to claim 3, wherein the quinacridone compound having the structure represented by the formula (B) accounts for 70% by mass or more of the composition.

6. A coloring composition comprising the composition according to claim 3 and a dispersive medium.

7. The coloring composition according to claim 6, wherein the quinacridone compound having the structure represented by the formula (B) accounts for 0.5% by mass to 50% by mass of the coloring composition.

8. A method for producing a quinacridone compound including a radioactive carbon atom ¹⁴C and having the structure represented by the following formula (B): 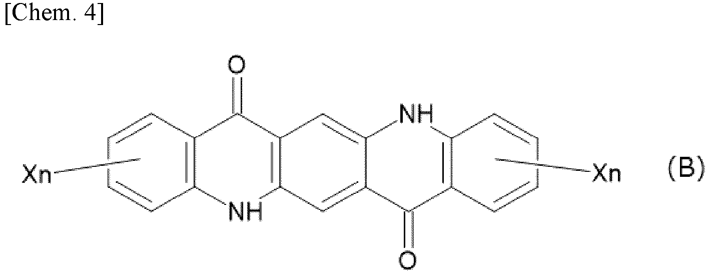
wherein X each independently represents -Cl, -F, -Br, -I, -OH, -NO₂, a C1 to C12 alkyl group, a C1 to C12 alkoxy group, a phenyl group, -COOH, -COO- C1 to C12 alkyl, or - CO-NR, R each independently represents a hydrogen atom, an alkyl group, an alkenyl group, or a phenyl group, and n each independently represents 1 or 2,
the method comprising:
(B-i) producing an aniline which may have a substituent by using a 4-aminobenzoic acid as a raw material;
(B-ii) producing dimethyl-2,5-dihydroxycyclohexa-1,4-diene-1,4-dicarboxylate by using succinic acid as a raw material;
provided that at least one of 4-aminobenzoic acid in (B-i) and succinic acid in (B-ii) is one derived from biomass; and
(B-iii) reacting the aniline which may have a substituent produced in (B-i) with a dimethyl-2,5-dihydroxycyclohexa-1,4-diene-1,4-dicarboxylate produced in (B-ii) to thereby produce the quinacridone compound having the structure represented by the formula (B).
